# EUROPEAN PATENT APPLICATION

(11) **EP 2 202 986 A1**
(43) Date of publication of application: **30.06.2010**
(21) Application number: 08841135.0
(22) Date of filing: 15.10.2008
(51) Int. Cl.: H04N 7/34

(54) **AN ADAPTIVE PREDICTING DEVICE AND METHOD**

(30) Priority: 15.10.2007 CN 200710181827
(71) Applicant: Huawei Technologies Co., Ltd., Longgang District, Shenzhen Guangdong 518129 (CN)
(72) Inventor: LIU, Yingjia, Guangdong 518129 (CN); LIN, Sixin, Guangdong 518129 (CN); GAO, Shan, Guangdong 518129 (CN); ZHOU, Jiantong, Guangdong 518129 (CN); FU, Jiali, Guangdong 518129 (CN); XIE, Qingpeng, Guangdong 518129 (CN); ZHANG, Xiaosen, Guangdong 518129 (CN); XIONG, Lianhuan, Guangdong 518129 (CN)
(74) Representative: Barth, Stephan Manuel
(86) International application number: PCT/CN2008/072688
(87) International publication number: WO 2009/052740

(57) **Abstract**

An adaptive frame prediction method includes: using at least one block partition method to partition an MB that needs to perform intra-frame prediction; using at least one prediction mode to predict each sub-block in each block partition result and obtaining a sub-block residual of a current sub-block; selecting multiple transformation methods according to the sub-block type to transform each sub-block residual and obtain the code-rate distortion ratio of the current sub-block; performing frame prediction for the MB according to the block partition method, the prediction mode, and the transformation method corresponding to the code-rate distortion ratio of a minimum value among all code-rate distortion ratios. An adaptive prediction apparatus disclosed herein includes: a block partition module, a predicting module, a transforming module, a selecting module, and a frame predicting module. The method and the apparatus herein perform the intra-frame or inter-frame coding flexibly, get more adaptive to the local texture statistic features of the MBs, and improve the coding efficiency.

## Description

### FIELD OF THE INVENTION

The present invention relates to video coding technologies, and in particular, to a method and an apparatus for adaptive frame prediction.

### BACKGROUND

With the rapid development and wide application of multimedia technologies and network technologies, more and more video data are transmitted through networks. The transmission of original video data requires tremendous bandwidth and involves great redundancy. Therefore, the video data is generally encoded and compressed before being transmitted. In the video coding technologies, in order to improve the compression efficiency, an input frame of a video image is generally partitioned into multiple Macro Blocks (MBs), and each MB is predicted, transformed, quantized, and encoded. Prediction includes intra-frame prediction and inter-frame prediction. The intra-frame prediction removes spatial redundancy, and the inter-frame prediction removes time redundancy.

The inter-frame prediction is a technology of predicting an image according to adjacent frames by using the redundancy of data between images, namely, using the dependency of pixels between adjacent frames in an active image sequence. In the inter-frame prediction process, the matching blocks of different sizes may be used. For example, an MB of a 16*16 size (measured in pixel points) may be partitioned into sub-blocks of a 16*8, 8*16, or 8*8 size. The minimum size of a sub-block is 4*4, and then motion search and matching are performed. After the MBs are partitioned, the matching blocks of different sizes may undergo motion search and matching through selection of the forward frame or backward frame of the current frame or selection of the bidirectional reference frame, and the sub-blocks are predicted according to different prediction modes to obtain sub-block residuals of the sub-blocks. The sub-block residuals of different sub-blocks undergo an Integer Discrete Cosine Transformation (IDCT) is applied to the sub-block residuals of different sub-blocks to obtain a code-rate distortion ratio. According to the code-rate distortion ratio, the best block partition method and the best prediction mode are selected to perform inter-frame prediction.

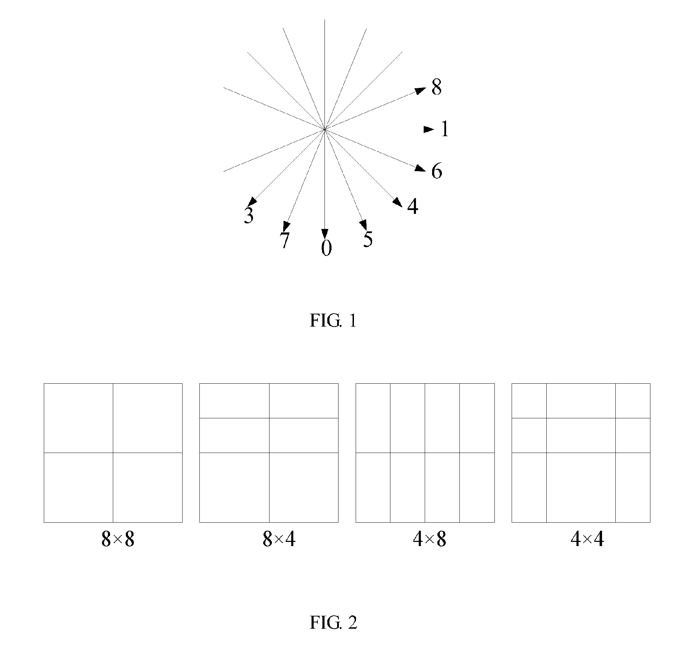

In the intra-frame prediction, the currently prevalent video coding and decoding standard H.264/AVC puts forward a new intra-frame prediction method on the basis of the old standard. The new intra-frame prediction method is: partition an image frame into multiple MBs of a 16*16 size, partition each MB into sixteen 4*4 sub-blocks, and perform intra-frame prediction for each sub-block in a different prediction mode respectively. In the H.264/AVC, for each 4*4 sub-block, the nine prediction modes in FIG. 1 are applicable. Besides, the H.264/AVC further includes the intra-frame prediction mode based on the sub-blocks of an 8*8 size or a 16*16 size.

The prior art provides a bidirectional intra-frame prediction method specific to H.264/AVC. This method combines every two of nine prediction modes available in the H.264/AVC according to a certain weight coefficient to obtain 36 new prediction modes. Therefore, there are a total of 9 + 36 = 45 intra-frame prediction modes.

The prior art also puts forward an adaptive transformation method specific to the H.264/AVC, namely, the macro block is divided into non-square sub-blocks of a 4*8 size or an 8*4 size shown in FIG. 2, and puts forward non-square IDCT for the non-square sub-blocks. FIG. 2 also shows a 4*4 square sub-block and an 8*8 square sub-block.

Besides, the prior art puts forward K-L transformation specific to bidirectional intra-frame prediction, which performs bidirectional intra-frame prediction for the sub-blocks of a 4*4 size and an 8*8 size and then substitutes the K-L transformation for the existing IDCT to transform the prediction result. The K-L transformation is a transformation method based on statistical features. The K-L transformation provides strong correlation, and is the best transformation under the mean square error and is important in the data compression technologies.

In the prior art, for both the intra-frame prediction method and the bidirectional intra-frame prediction method in the H.264/AVC, the adaptability of the mode selection depends on transformation and quantization of residuals. The sub-blocks are regular squares, and the transformation method applied is a traditional IDCT method, which damages the continuous textures in the image and leads to obvious block effects.

For the transformation method in the inter-frame prediction, the adaptive transformation method in the intra-frame prediction, and the Karhunen-Loeve (KL) transformation method of the bidirectional intra-frame prediction, these transformation methods are based on the current regularly partitioned blocks. Although the KL transformation method of bidirectional intra-frame prediction replaces the traditional IDCT, the sub-blocks generated through different block partition methods take on different energy distribution, and the existing transformation method leads to low coding efficiency.

### SUMMARY

The embodiments of the present invention provide a method and an apparatus for adaptive frame prediction to perform intra-frame prediction or inter-frame prediction according to the best frame prediction method.

The technical solution under the present invention is implemented in the following way.

An adaptive frame prediction method includes:
using at least one block partition method to partition an MB that needs to perform intra-frame prediction;
using at least one prediction mode to predict each sub-block in each block partition result and obtaining a sub-block residual of a current sub-block;
using at least one transformation method to transform each sub-block residual;
obtaining a code-rate distortion ratio of the current sub-block according to a type of the sub-block, a current prediction mode, and the transformation method; and
performing frame prediction for the MB according to the block partition method, the prediction mode, and the transformation method corresponding to the code-rate distortion ratio of a minimum value among all code-rate distortion ratios.

An adaptive frame prediction apparatus provided in an embodiment of the present invention includes:
a block partition module, adapted to: use at least one block partition method to partition an MB that needs to perform intra-frame prediction, and send a block partition result to a predicting module;
a predicting module, adapted to: use at least one prediction mode to predict each sub-block in each received block partition result, obtain a sub-block residual of a current sub-block, and send the sub-block residual to a transforming module;
a transforming module, adapted to: use at least one transformation method to transform each sub-block residual; obtain a code-rate distortion ratio of the current sub-block according to the type of the sub-block, a current prediction mode, and the transformation method; and send the code-rate distortion ratio to a selecting module;
a selecting module, adapted to: select the code-rate distortion ratio of a minimum value among all obtained code-rate distortion ratios, and send the selected code-rate distortion ratio to a frame predicting module; and
a frame predicting module, adapted to perform frame prediction for the MB according to the block partition method, the prediction mode, and the transformation method corresponding to the received code-rate distortion ratio.

In conclusion, the method and the apparatus provided herein combine the traditional intra-frame prediction technology with the bidirectional prediction technology, use different transformation methods, select the best frame prediction method to implement intra-frame prediction or inter-frame prediction flexibly, provide the maximum flexibility of intra-frame coding and inter-frame coding of MBs, provide better intra-frame and inter-frame coding performance in the case of different texture features, get more adaptive to the local texture statistic features of the MBs, and improve the coding efficiency significantly.

### BRIEF DESCRIPTION OF THE DRAWINGS

FIG. 1 shows nine prediction modes in the prior art;
FIG. 2 shows a result of partition an MB in the prior art;
FIG. 3 is a flowchart of an adaptive intra-frame prediction method in an embodiment of the present invention;
FIG. 4(a) and FIG. 4(b) show an irregular MB partition method in an embodiment of the present invention;
FIG. 5 shows another irregular MB partition method in an embodiment of the present invention; and
FIG. 6 shows an adaptive intra-frame prediction apparatus in an embodiment of the present invention.

### DETAILED DESCRIPTION OF THE EMBODIMENTS

In order to make the technical solution, objectives and merits of the present invention clearer, the following describes the present invention in more detail with reference to accompanying drawings and preferred embodiments.

The technical solution under the present invention is described below, supposing that the MBs for intra-frame prediction are pixel points of a 16*16 size.

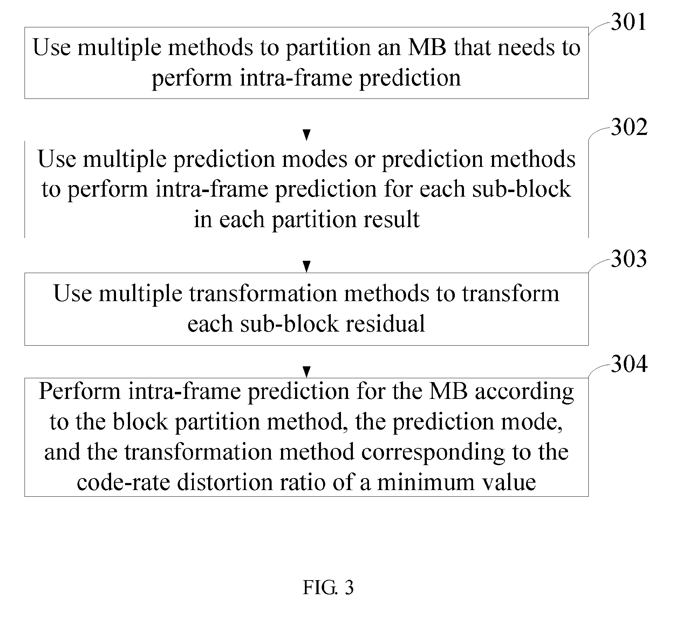

FIG. 3 is a flowchart of an adaptive intra-frame prediction method in an embodiment of the present invention. As shown in FIG. 3, the adaptive intra-frame prediction method in this embodiment includes the following steps:
Step 301: Use multiple methods to partition an MB that needs to perform intra-frame prediction.

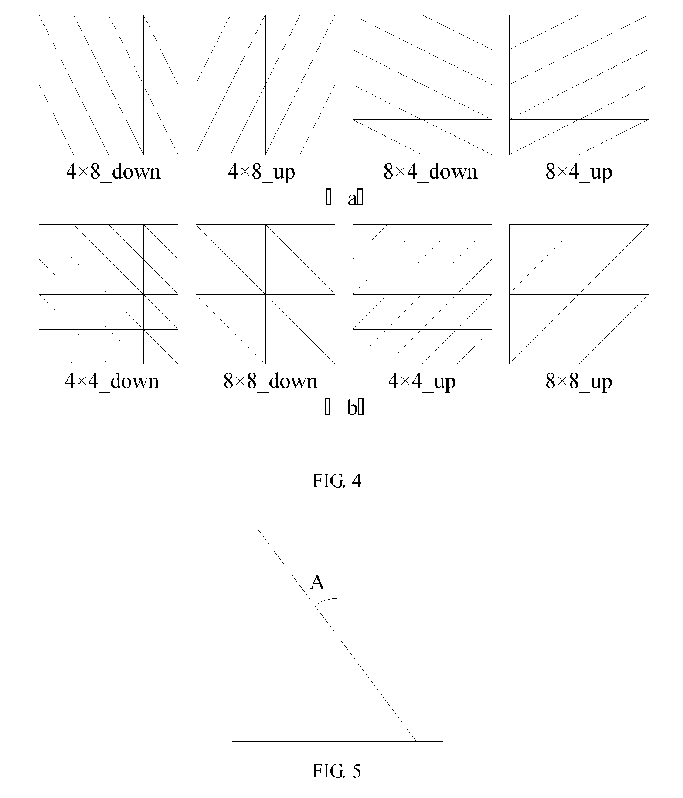

That is, use n (n>1) block partition methods to partition an MB that needs to perform intra-frame prediction into sub-blocks. Because each different partition method generates sub-blocks of different shapes or sizes, n block partition methods generate n partition results. Generally, the n block partition methods fall into two types: regular block partition methods and irregular block partition methods. Regular block partition methods (in which the generated sub-blocks are rectangles) include four block partition methods shown in FIG. 2; irregular block partition methods use the texture features of MBs to partition each sub-block into two non-rectangle sub-blocks along a non-vertical non-horizontal line, where the sub-block comes from the partition result generated according to the regular block partition method. For example, each sub-block is partitioned into two symmetrical triangles along the diagonal line of each sub-block. In this case, the regular block partition results (4*8) and (8*4) may be subdivided according to four block partition methods shown in FIG. 4(a), and the generated partition results are: (4*8_drown), (4*8_up), (8*4_drown), and (8*4_up); the regular block partition results (4*4) and (8*8) may be subdivided according to four block partition methods shown in FIG. 4(b), and the generated partition results are: (4*4_down), (4*4_up), (8*8_drown), and (8*8_sup). Besides, the irregular block partition method shown in FIG. 5 exists. That is, the rectangular sub-block is partitioned into two non-rectangular sub-blocks along the straight line shown in FIG. 5. The midpoint of the straight line coincides with the geometric center of the rectangular sub-block, and the straight line may rotate around an axis that is vertical to the paper and passes through its center. After rotation, the angle A may be preset according to the actual application conditions or the texture features of the image.

Step 302: Use multiple prediction modes to perform intra-frame prediction for each sub-block in each partition result.

That is, for each of the n partition results, m(m>1) prediction modes (for example, nine prediction modes in the H.264/AVC, and 36 new prediction modes obtained by combining every two of the nine prediction modes according to a certain weight coefficient) are used to perform intra-frame prediction for each sub-block in each partition result, and the corresponding sub-block residual (namely, a difference between the predicted value and the original value) are obtained according to the prediction result. Because the same prediction mode is applied to all sub-blocks in the same partition result, (n*m) sub-block residuals are obtained after this step.

Step 303: Use multiple transformation methods to transform each sub-block residual.

That is, k (k>1) transformation methods are used to transform each of the (n*m) sub-block residuals. Because different code-rate distortion ratios (RD_Cost) are obtained when different partition methods, different prediction modes, or different transformation methods are applied, (n*m*k) code-rate distortion ratios are obtained after this step. The transformation method may be IDCT, Karhunen-Loeve (K-L) transformation, or wavelet transformation.

The sub-block residuals obtained above may be transformed according to two or more transformation methods. The transformation method may be IDCT or K-L transformation. The sub-blocks obtained through the regular block partition method may be transformed through K-L transformation or IDCT transformation respectively, and the sub-blocks obtained through the irregular block partition method may be transformed through K-L transformation.

In the K-L transformation, for the selection of the K-L coefficient, a unified K-L Transformation (KLT) code table may be set first, and then the unified KLT code table is searched in a certain range according to different block partition methods and different prediction modes to obtain the best KL transformation coefficient; and the sub-block residual is transformed according to the best KL transformation coefficient to obtain the code-rate distortion ratio.

Besides, for the selection of the KL coefficient, the corresponding KLT coefficient code table may be obtained directly according to different block partition methods and different prediction modes, and the sub-block residual is transformed according to the corresponding KL transformation coefficient to obtain the code-rate distortion ratio.

Step 304: Perform intra-frame prediction for the MB according to the block partition method, the prediction mode, and the transformation method corresponding to the code-rate distortion ratio of a minimum value.

That is, a code-rate distortion ratio of a minimum value is selected among the n*m*k code-rate distortion ratios, and the block partition method, the prediction mode, and the transformation method corresponding to the selected code-rate distortion ratio are used as the best block partition method, the best prediction mode, and the best transformation method to perform intra-frame prediction for the MB.

After the best block partition method, the best prediction mode, and the best transformation method are selected, they are notified to the coder and the decoder to encode and decode the data and then the data is transmitted. In this embodiment, the notification may be implemented through modification of the MB header information.

The MB header information already includes the information about the prediction mode used by the current module. Therefore, the coder and the decoder can obtain the prediction mode information directly from the MB header information.

As regards the information about the used block partition method, multiple regular block partition methods and irregular block partition methods exist. Therefore, the existing MB header information may be modified, namely, a block partition flag bit (mb_partition _flag) is added into the MB header information, and then the value of the flag bit is set according to the actual conditions. In this way, the best method of partitioning the MB may be determined in the process of coding and decoding according to the value of the flag bit. Table 1 shows the modification of the MB header information:

**Table 1**

| macroblock_layer { | C | Descriptor |
|---|---|---|
| ... | | |
| mb type | 2 | u(v)\|ae(v) |
| if(mb_type == I_N*N) { | | |
| mb_partition _flag | 2 | u(v)\|ae(v) |
| } | | |
| ... | | |
| } | | |

In Table 1, macroblock_layer represents a MB layer, C represents the class of importance, and Descriptor represents the coding type; mb_type represents the MB type with its importance being 2, and the coding mode may be a variable-length coding method u(v) or a coding method ae(v) based on a context model; mb_artition_flag represents a newly added flag bit with its importance being 2, and the coding method is a variable-length coding method u(v) or a coding method ae(v) based on a context model. The v in the u(v) may be 2, and u(2) represents a variable-length coding method with a fixed length of 2, and so on.

After the MB header information is set, in the process of coding or decoding, the coder or the decoder may determine the best block partition method according to the MB type in the MB header information and the newly added flag bit.

For example, if the optional block partition methods are the four regular block partition methods shown in FIG. 2 and the four block partition methods shown in FIG. 4(a), the length of the flag bit "mb_partition_flag" may be 2 bits, and the value of the flag bit may be 0, 1, 2, or 3. In this case, the selected best block partition method may be obtained according to the MB type and the flag bit value.

First, the MB type needs to be determined. If the MB type is I4*4MB, when the flag bit value is less than 2, the selected best block partition method is a regular block partition method. For example, when the flag bit value is 0, it indicates that the selected best block partition method is a 4*4 regular block partition method; when the flag bit value is 1, it indicates that the selected best block partition method is a 4*8 regular block partition method. When the flag bit value is greater than or equal to 2, the selected best block partition method is an irregular block partition method. For example, when the flag bit value is 2, it indicates that the selected best block partition method is a 4*8_drown irregular block partition method; when the flag bit value is 3, it indicates that the selected best block partition method is a 4*8_up irregular block partition method.

Likewise, if the MB type is I8*8MB, when the flag bit value is less than 2, the selected best block partition method is a regular block partition method. For example, when the flag bit value is 0, it indicates that the selected best block partition method is an 8*4 regular block partition method; when the flag bit value is 1, it indicates that the selected best block partition method is an 8*8 regular block partition method. When the flag bit value is greater than or equal to 2, the selected best block partition method is an irregular block partition method. For example, when the flag bit value is 2, it indicates that the selected best block partition method is an 8*4_down irregular block partition method; when the flag bit value is 3, it indicates that the selected best block partition method is an 8*4_up irregular block partition method.

The foregoing embodiment is only a preferred exemplary embodiment. In practice, the length of the flag bit and the mapping relation between the flag bit value and the block partition method may be set flexibly according to the actual conditions. The foregoing embodiment supposes that the four irregular block partition methods shown in FIG. 4(a) are applied. In practice, the four irregular block partition methods shown in FIG. 4(b) may be applied, or several of the eight irregular block partition methods shown in FIG. 4 may be applied. If more than four irregular block partition methods are applied, the length of the flag bit may be extended, and the mapping relation between the flag bit value and the block partition method may be reset. For example, the length of the flag bit may be extended to 3 bits, and the mapping relation between the flag bit value and the eight block partition methods may be reset.

Besides, as regards the information about the transformation method applied, step 303 reveals that: If two transformation methods are applied, namely, if an IDCT transformation method and a K-L transformation method are applied, the K-L transformation is used instead of the IDCT to transform the sub-block derived from the irregular partition method. For the sub-block derived from a regular partition method, either of the two transformation methods may be selected under each prediction mode. Therefore, a transformation flag bit whose length is one bit (namely, Mb_Transform_Type) needs to be added after the MB prediction information. The coder and the decoder may determine the transformation method for the current sub-block according to this flag bit. Table 2 shows the location of the MB transformation type in the MB prediction transformation syntax after the transformation flag bit is added:

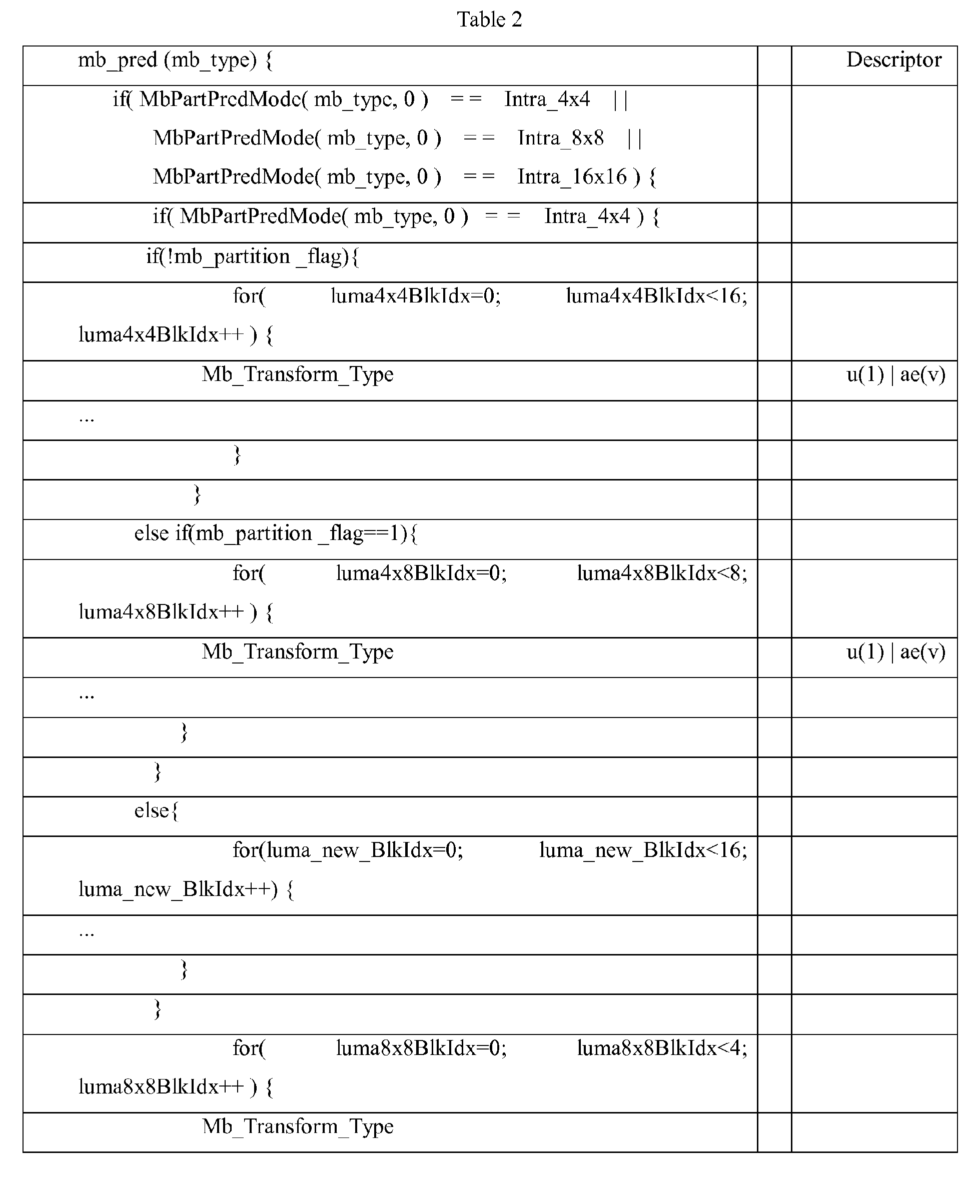

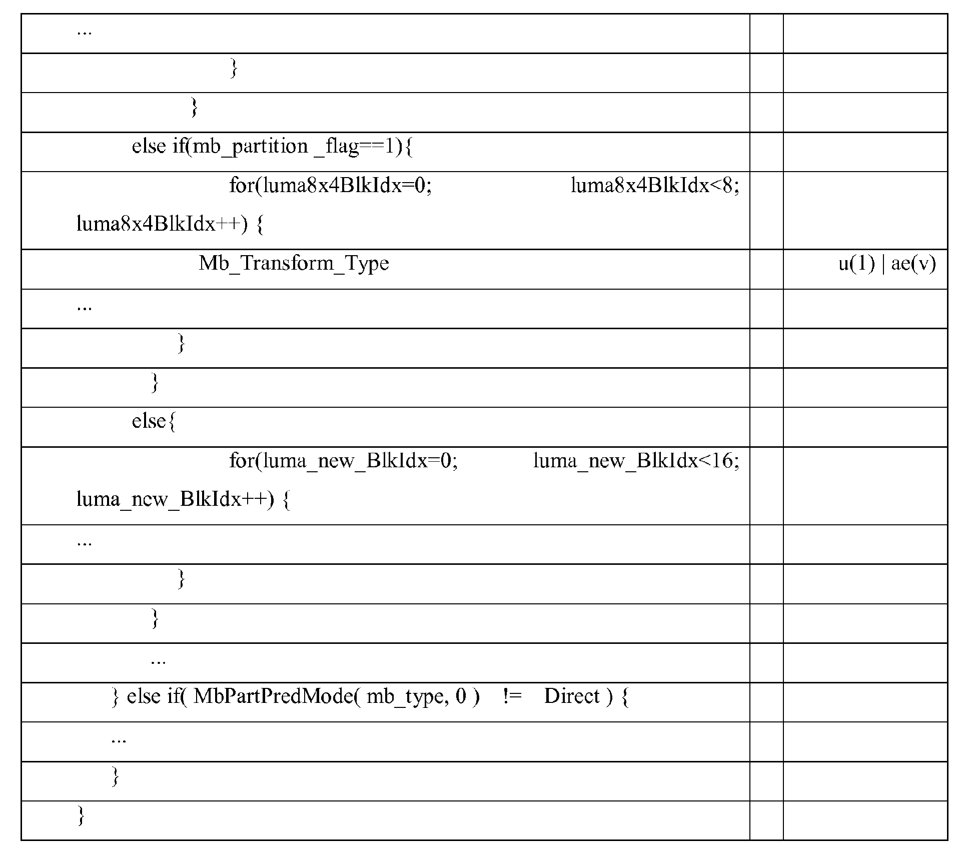

In order to reduce the data that needs to be transmitted, the foregoing flag bit may not be added in the MB header information; instead, the transformation method for the current sub-block is determined according to the block partition method based on the agreed rules. For example, supposing that two transformation methods (namely, IDCT and K-L transformation) are applicable, the coder and the decoder may agree the following mapping relation between the transformation method, the partition method, and the prediction mode beforehand:
If the selected block partition method is a regular block partition method, namely, (4*4), (8*8), (4*8) or (8*4), and a vertical, horizontal or Direct Current (DC) prediction mode is applied in the sub-block in the partition result, an IDCT method may be applied to transform the current sub-block.
If the selected block partition method is a regular block partition method, namely, (4*4), (8*8), (4*8) or (8*4), and no vertical, horizontal or DC prediction mode is applied in the sub-block in the partition result, or, if the selected block partition method is an irregular block partition method, a K-L Transformation (KLT) method may be applied to transform the current sub-block.

According to the pre-agreed mapping relation between the transformation method, the partition method, and the prediction mode, the coder and the decoder may obtain the transformation method applied to the current sub-block directly in light of the known block partition method and the prediction mode.

Likewise, if more than two transformation methods are applied, the length of the flag bit added in the MB header information may be extended properly (for example, extended to 2 bits, 3 bits, and so on) so that the coder and the decoder can determine the transformation method for the current sub-block according to this flag bit; or the transformation method for the current sub-block may be obtained through a pre-agreement.

Described above is an adaptive intra-frame prediction method. The inter-frame prediction method differs from the intra-frame prediction method in the block partition mode and the prediction mode. That is, the inter-frame prediction uses the prior frame information and the posterior frame information as prediction reference information, and uses sub-blocks of different sizes to perform motion search and matching on the reference frame to search for the matching block and obtain a sub-block residual for transformation. However, the reference information applied in the intra-frame prediction is the information about surroundings of the MB in the same frame. Therefore, the adaptive intra-frame prediction method is also applicable to inter-frame prediction. The method applied in the inter-frame prediction is similar, and is not repeated here any further.

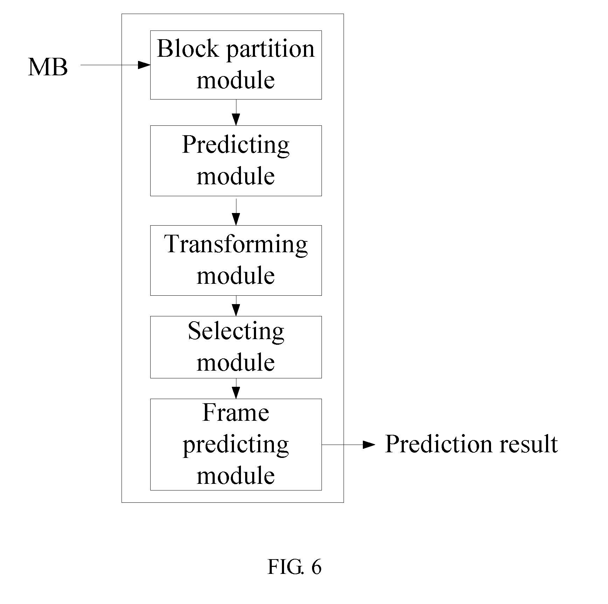

FIG. 6 shows an adaptive frame prediction apparatus in an embodiment of the present invention. As shown in FIG. 6, the adaptive intra-frame prediction apparatus in this embodiment includes:
a block partition module, adapted to: use at least one block partition method to partition an MB that needs to perform intra-frame prediction, and send a block partition result to a predicting module;
a predicting module, adapted to: use at least one prediction mode to predict each sub-block in each received block partition result, obtain a sub-block residual of a current sub-block, and send the sub-block residual to a transforming module;
a transforming module, adapted to: use at least one transformation method to transform each sub-block residual; obtain a code-rate distortion ratio of the current sub-block according to the type of the sub-block, a current prediction mode, and the transformation method; and send the code-rate distortion ratio to a selecting module;
a selecting module, adapted to: select the code-rate distortion ratio of a minimum value among all obtained code-rate distortion ratios, and send the selected code-rate distortion ratio to a frame predicting module; and
an intra-frame predicting module, adapted to: perform intra-frame prediction for the MB according to the block partition method, the prediction mode, and the transformation method corresponding to the received code-rate distortion ratio, and output an intra-frame prediction result.

Described above are merely preferred embodiments of the present invention, but not intended to limit the scope of the present invention. Any modification, equivalent replacement, and improvement made without departing from the spirit and principle of the present invention fall within the scope of the present invention.

## Claims

1. An adaptive frame prediction method, comprising:
using at least one block partition method to partition a Macro Block (MB) that needs to perform intra-frame prediction;
using at least one prediction mode to predict each sub-block in each block partition result and obtaining a sub-block residual of a current sub-block;
using at least one transformation method to transform each sub-block residual;
obtaining a code-rate distortion ratio of the current sub-block according to a type of the sub-block, a current prediction mode, and the transformation method; and
performing frame prediction for the MB according to a block partition method, a prediction mode, and a transformation method corresponding to a code-rate distortion ratio of a minimum value among all code-rate distortion ratios.

2. The adaptive frame prediction method of claim 1, wherein:
if the frame prediction is intra-frame prediction, the block partition method comprises at least one irregular block partition method.

3. The adaptive frame prediction method of claim 2, wherein the irregular block partition methods comprise:
a block partition method which partitions each rectangular sub-block into two non-rectangular sub-blocks along a straight line of non-vertical and non-horizontal.

4. The adaptive frame prediction method of claim 3, wherein the irregular block partition methods comprise:
a block partition method which partitions each rectangular sub-block into two non-rectangular sub-blocks along a diagonal line of a rectangle.

5. The adaptive frame prediction method of claim 2, wherein the using of the at least one transformation method to transform each sub-block residual comprises:
if a type of the current sub-block is a sub-block generated through the irregular block partition method, using the at least one transformation method except an Integer Discrete Cosine Transformation (IDCT) method to transform the sub-block residual of the current sub-block; and
if the type of the current sub-block is a sub-block generated through a regular block partition method, using at least two transformation methods to transform the sub-block residual of the current sub-block.

6. The adaptive frame prediction method of claim 1, wherein the transformation methods comprise: Integer Discrete Cosine Transformation (IDCT), Karhunen-Loeve (K-L) transformation, and wavelet transformation.

7. The adaptive frame prediction method of claim 3, wherein when using Karhunen-Loeve (K-L) transformation to transform the sub-block residual:
searching a preset unified K-L transformation code table for a best K-L transformation coefficient according to different block partition methods and different prediction modes, and performing the K-L transformation for the sub-block residual according to the best K-L transformation coefficient; or
obtaining corresponding K-L transformation coefficient code tables respectively according to different block partition methods and different prediction modes, and performing the K-L transformation for the sub-block residual according to corresponding K-L transformation coefficients.

8. The adaptive frame prediction method of claim 1, further comprising:
setting a block partition flag bit in MB header information, and determining the block partition method for partitioning the MB according to a type of the MB and a value of the block partition flag bit.

9. The adaptive frame prediction method of claim 1, further comprising:
setting a transformation flag bit after MB prediction information, and determining a transformation method for transforming the sub-block residual of the current sub-block according to a value of the transformation flag bit.

10. The adaptive frame prediction method of claim 1, wherein the obtaining of the code-rate distortion ratio of the current sub-block according to the type of the sub-block, the current prediction mode, and the transformation method comprises:
selecting at least one transformation method according to a preset type of the sub-block and the current prediction mode, and obtaining the code-rate distortion ratio of the current sub-block; or
selecting any one of types of the sub-blocks as a combined type;
selecting any one of current prediction modes as a combined mode;
selecting any one of the transformation methods as a combined method; and
obtaining the code-rate distortion ratio of the current sub-block according to the combined type, the combined mode, and the combined method.

11. An adaptive frame prediction apparatus, comprising:
a block partition module, adapted to use at least one block partition method to partition a Macro Block (MB) that needs to perform intra-frame prediction, and send a block partition result to a predicting module;
the predicting module, adapted to use at least one prediction mode to predict each sub-block in each received block partition result, obtain a sub-block residual of a current sub-block, and send the sub-block residual to a transforming module;
the transforming module, adapted to: use at least one transformation method to transform each sub-block residual; obtain a code-rate distortion ratio of the current sub-block according to a type of the sub-block, a current prediction mode, and the transformation method; and send the code-rate distortion ratio to a selecting module;
the selecting module, adapted to select a code-rate distortion ratio of a minimum value among all obtained code-rate distortion ratios, and send the selected code-rate distortion ratio to a frame predicting module; and
the frame predicting module, adapted to perform frame prediction for the MB according to a block partition method, a prediction mode, and a transformation method corresponding to the received code-rate distortion ratio.
